# EUROPEAN PATENT APPLICATION

(11) **EP 3 032 707 A1**
(43) Date of publication of application: **15.06.2016**
(21) Application number: 14196799.2
(22) Date of filing: 08.12.2014
(51) Int. Cl.: H02K 1/27, H02K 1/32, H02K 7/18

(54) **Cooling arrangement**

(71) Applicant: Siemens Aktiengesellschaft, 80333 München (DE)
(72) Inventor: Madani, Nima, 7100 Vejle (DK)

(57) **Abstract**

The invention describes a cooling arrangement (1) for a generator (2) comprising a rotor (20) bearing an arrangement of permanent magnets (M), which cooling arrangement (1) comprises a magnet cooling arrangement (10), which magnet cooling arrangement (10) comprises a number of magnet cooling channels (100) in the body of the rotor (20); and a number of cooling elements (101) filled with a cooling fluid (L), wherein a cooling element (101) is arranged in a magnet cooling channel (100) such that the cooling fluid (L) absorbs heat from the permanent magnets (M) during operation of the generator (2). The invention further describes method of cooling a generator (2); a rotor (20) realized to bear an arrangement of permanent magnets (M); and a wind turbine (3).

## Description

The invention describes a cooling arrangement; a method of cooling a generator; a rotor body; and a wind turbine.

The performance of a permanent-magnet synchronous generator (PMSG) such as a wind turbine generator depends to a certain extent on the temperature of the magnets, since magnetic characteristics such as remanence and coercivity knee-point are influenced by temperature. An excessively high magnet temperature can permanently reduce the remanence of the magnets. As a result, the magnet torque density is lowered. In order to compensate for such a reduction in magnet torque, it would be necessary to increase the generator dimensions, thereby significantly increasing the weight and cost of the generator.

Excessively high magnet temperature also reduces the numerical value of the coercivity knee-point, thereby reducing the demagnetization safety margin. In order to avoid or at least limit the extent of demagnetization, it can be necessary to include heavier rare earth materials in the magnet and/or to apply more complex manufacturing processes. Again, these measures are associated with higher cost. Furthermore, reliance on specific heavier rare earth elements is associated with planning uncertainty, since the availability of these materials in the required amounts cannot be relied on.

The stator windings are the hottest part of the generator during operation. Since the permanent magnets are only separated from the windings by a very narrow air-gap (in the region of only a few millimetres), the magnets are heated by the windings. As mentioned above, high magnet temperatures can have a detrimental effect on the magnet properties and therefore also on the generator performance. For these reasons, considerable effort is invested in cooling a generator during operation. Some known cooling systems make use of a fluid coolant to circulate a liquid or a gas through the hotter parts of the generator. For example, in a low-speed direct-drive PMSG wind turbine, 80% of the heat-related losses arise in the windings of the stator, so that the cooling effort is directed mainly at cooling the windings. Liquids like water have a very favourable heat transfer coefficient. However, due to the risk of liquid leakage, which could lead to severe damage, the stator windings are not usually directly cooled by a liquid coolant. A direct liquid cooling of the windings is difficult, since it would be extremely complicated to arrange a system of ducts through the laminated steel of the stator. For these reasons, the stator windings are usually air-cooled. In one type of generator cooling system, a cooling airflow can be conveyed through channels in the stator body so that the air collects heat from the windings. The air can then be drawn through the air-gap and recirculated. A drawback of such an air-cooling system is that the warmed air can further heat the magnets, since the windings are usually hotter than the magnets. In an alternative cooling system, the cooling airflow is first conveyed into the air-gap and then drawn through channels in the stator body into the stator interior. However, even in such an arrangement, temperatures in the magnets can reach critical levels.

It is therefore an object of the invention to provide an improved cooling arrangement for a generator that avoids the problems outlined above.

This object is achieved by the cooling arrangement of claim 1; by the method of claim 11 of cooling a generator; by the rotor of claim 13; and by the wind turbine of claim 14.

According to the invention, the cooling arrangement - for a generator comprising a rotor bearing an arrangement of permanent magnets - comprises a magnet cooling arrangement, which magnet cooling arrangement comprises a number of magnet cooling channels in the body of the rotor; and a number of cooling elements realized to contain a cooling fluid, wherein a cooling element is arranged in a magnet cooling channel such that the cooling fluid absorbs heat from the permanent magnets during operation of the generator.

An advantage of the cooling arrangement according to the invention is that it can ensure a very effective cooling of the permanent magnets. The magnet cooling channels can be realized to be in physical proximity to the permanent magnets, so that the cooling fluid in the cooling elements can absorb heat from the magnets in a favourably efficient manner.

According to the invention, the method of cooling a generator - comprising a rotor bearing an arrangement of permanent magnets and a stator comprising an arrangement of windings - comprises the steps of arranging a number of magnet cooling channels in the body of the rotor; filling a number of cooling elements with a cooling fluid; and arranging the cooling elements in the magnet cooling channels.

An advantage of the method according to the invention is that the arrangement of magnet cooling channels can be achieved with relatively little effort and expense. The body of the rotor of a generator such as a permanent magnet synchronous generator of a direct-drive wind turbine is generally a solid body, so that a magnet cooling channel large enough to accommodate a cooling element can be formed in the body in a relatively straightforward manner.

According to the invention, the rotor is realized to bear an arrangement of permanent magnets, and comprises a number of magnet cooling channels in the body of the rotor, wherein a magnet cooling channel is realized to accommodate a fluid-filled cooling element.

An advantage of the rotor according to the invention is that it can carry significant parts of a magnet cooling arrangement without having to re-model a rotor housing of the generator, for example the outer housing of a direct-drive wind turbine generator. Instead, components of the magnet cooling arrangement can effectively be "buried" in the rotor body.

According to the invention, the wind turbine comprises a generator with a rotor bearing an arrangement of permanent magnets, and a cooling arrangement according to the invention, realised to cool at least the permanent magnets of the rotor.

An advantage of the wind turbine according to the invention is that the magnets can be explicitly cooled during operation of the generator, and it is not necessary to rely on the efficiency of a windings cooling arrangement. In this way, the risk of heat damage to the permanent magnets is reduced or eliminated.

Particularly advantageous embodiments and features of the invention are given by the dependent claims, as revealed in the following description. Features of different claim categories may be combined as appropriate to give further embodiments not described herein.

The permanent magnets or magnet poles of a synchronous generator of a wind turbine may be very large, since the rotor of such a generator can have a diameter of several metres, and a length of several meters. In the context of the invention, the expression "permanent magnet" may be understood to be a magnet pole that may comprise several pole pieces. For example, a single magnet pole may comprise five or more pole pieces. The pole pieces may be inserted into machined slots in the body of the rotor or held to the rotor body by any other suitable means.

In the following, it may be assumed that the wind turbine is a direct-drive wind turbine in which the armature is an outer rotor carrying an arrangement of permanent magnets. It may also be assumed that the wind turbine comprises some kind of winding cooling arrangement for cooling the windings during operation of the generator. For example, in a preferred embodiment, the method according to the invention comprises the steps of arranging a number of winding cooling channels between the windings and/or in the body of the stator; and conveying a cooling fluid through the winding cooling channels to absorb heat from the windings. Exemplary embodiments will be described below.

In a particularly preferred embodiment of the invention, the magnet cooling arrangement comprises at most one magnet cooling channel for each permanent magnet. For example, in a direct-drive generator with a rotor bearing an arrangement of 65 permanent magnet poles, at most 65 cooling channels will be formed in the body of the rotor. These cooling channels are preferably uniformly spaced about the circumference of the rotor, such that each cooling channel is aligned along the middle of the corresponding magnet.

For efficient operation of a synchronous generator, the persistent magnetic field created by the permanent magnets is preferably not interrupted in regions of high magnetic flux density. An "interruption" might be given by a discontinuity in the material of the rotor. The requirement of an uninterrupted magnetic field applies in particular to the regions in the magnetic field that are characterized by dense magnetic field lines. In the case of a permanent magnet such as that used in a wind turbine, the magnetic field has regions of high density close to the outer edges of the permanent magnet. The rotor body portion at an outer edge of a magnet pole may therefore be regarded as lying in a region of high magnetic flux density. However, some regions of the rotor body coincide with regions of low magnetic flux density, in which material discontinuities or interruptions would not have a detrimental effect on the magnetic field. Therefore, in a particularly preferred embodiment of the invention, a magnet cooling channel is arranged along a region of low magnetic flux of a permanent magnet. In a particularly preferred embodiment of the invention, a cooling channel is formed essentially parallel to the rotational axis of the generator. Preferably, a magnet cooling channel is arranged parallel to a longitudinal axis of its magnet pole, so that the cooling element will lie "along the middle" of the permanent magnet. The underside of the magnet will be separated from the cooling element by a remaining layer thickness of the rotor body.

A magnet cooling channel can be formed in the body of the rotor using any suitable technique. Generally, a rotor body of a large direct-drive generator is formed in one piece. The magnet poles of an outer rotor are arranged on the interior surface of the rotor body. Therefore, in a preferred embodiment of the invention, the magnet cooling channel is formed by removing material from the outside of the essentially cylindrical rotor body using a suitable process such as milling. For example, a shallow rectangular channel can be milled along the length of the rotor. As already mentioned, maintenance of the integrity of the magnetic field is an important issue, and the cooling arrangement according to the invention arranges the magnet cooling channels in a region of low magnetic flux density. In a further preferred embodiment of the invention, a magnet cooling channel comprises a radial cross-sectional shape based on the form of a region of low magnetic flux. For example, instead of milling a rectangular channel with inner corners, the channel might be formed to have a rounded shape. Milling can also be applied to form rotor slots for holding the magnet poles in place, so that the same or similar milling tools can be used to form the rotor slots as well as the magnet cooling channels.

The cooling fluid contained in the cooling elements can be any appropriate or suitable fluid. For example, the cooling fluid could comprise a gas. However, since it is preferable to obtain a high degree of cooling efficiency, in a preferred embodiment of the invention the cooling elements are realized to contain a cooling liquid. Any suitable liquid could be used, for example an appropriate oil could be used. However, in a particularly preferred embodiment of the invention, the cooling liquid comprises water, since water is economical and is easily obtainable. Of course, the cooling liquid can comprise more than one substance, for example a mixture of water and a liquid coolant to lower the freezing point of the cooling liquid and to elevate its boiling point.

In a preferred embodiment of the invention, a cooling element comprises a sealed fluid-filled container, shaped to fit the magnet cooling channel. For example, if the magnet cooling channels are rectangular in cross-section, a cooling element can comprise a correspondingly rectangular body that can be filled with a cooling fluid and then sealed to contain the fluid. Preferably, the cooling element is made of a material that conducts heat well, such as metal. For example, a cooling element can be realized as a flat hollow metal container which can be filled with water or other cooling liquid, and then sealed, for example by welding. Preferably, the cooling element is completely filled with liquid to avoid any overpressure caused by expanding hot air when the liquid is heated. Subsequently, a filled and sealed cooling element can be laid into the magnet cooling channel of the rotor body. This step can be carried out before assembling the generator. Alternatively, filled cooling elements can be inserted into the magnet cooling channels of the rotor in a previously assembled generator.

In one preferred embodiment of the invention, the magnet cooling arrangement comprises such fluid-filled cooling elements laid into corresponding magnet cooling channels. The cooling elements can be secured in any suitable way to the rotor body. In such an embodiment, each fluid-filled cooling element each effectively acts as a heat sink. To obtain a favourably efficient cooling of the magnets, the width of the cooling element is preferably chosen to be as wide as possible, while at the same time not exceeding the width of the region of low magnetic flux density. The temperature gradient caused by a heated magnet will result in convection of the cooling water inside the cooling element. To maximise the cooling effect, the material used to construct the cooling element is preferably a good conductor of heat, for example copper.

In an alternative embodiment, a cooling element embedded in the rotor body can have a physical thermal connection to a separate heat sink. For example, a magnet cooling channel can be formed to accommodate a filled cooling element as well as a heat sink element, such that the filled cooling element is arranged close to the magnet, while the heat sink element is arranged on the other side of the cooling element to transport heat to the outer surface of the rotor. Here also, to maximise the cooling effect, the heat sink is preferably made of material with good thermal conductivity.

In a further preferred embodiment of the invention, a cooling element is laid in a magnet cooling channel, and an additional heat sink is arranged on the outer surface of the rotor such that the heat sink is in thermal contact to the outer surface of the cooling element. In this embodiment, the additional heat sink adds to the outer diameter of the rotor. However, the advantage of this embodiment is that the cooling element can be relatively large, since it can effectively fill the region of low magnetic flux, and the cooling is increased by the additional heat sink. In this embodiment, the heat sink can have a favourably large cooling area, providing more surface for heat dissipation. For example, the additional heat sink can be wider than the width of the cooling element and/or its surface can be machined to form an arrangement of grooves to increase its overall surface area. The windings are the main source of heat in a generator such as a wind turbine generator. Since the current-carrying capacity of an electrical conductor decreases as its temperature increases, the stator windings must be cooled if the generator is to perform efficiently. There are various ways of cooling the stator windings. For example, a liquid cooling circuit can be constructed so that liquid coolant is brought into close proximity to the windings. However, it can be difficult to cool the windings using such a liquid cooling circuit, particularly since this type of cooling approach can at most cool the "undersides" of the windings, but cannot reach the air-gap side of the windings. Therefore, in a further preferred embodiment of the invention, the cooling arrangement comprises a winding cooling arrangement for cooling a plurality of windings arranged on a stator of the generator, which winding cooling arrangement comprises a number of winding cooling channels arranged between the windings and/or in the body of the stator; and comprising a stator cooling circuit for conveying a cooling fluid through the winding cooling channels. To be able to cool the windings also in the air-gap region, the stator cooling circuit is preferably realized to convey a cooling gas through the winding cooling channels. Any suitable gas can be used, however a particular cost-effective approach utilizes air as a cooling medium. No particular effort need then be taken to seal the generator in order to contain the cooling gas.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a portion of a permanent-magnet synchronous generator of a wind turbine with a first embodiment of a magnet cooling arrangement according to the invention;
Fig. 2 shows a cross-section through a generator of a wind turbine according to the invention;
Fig. 3 shows a portion of a prior art permanent-magnet synchronous generator;
Fig. 4 shows curves of magnetic flux density against magnetic field for a permanent magnet;
Fig. 5 shows a second embodiment of a magnet cooling arrangement according to the invention;
Fig. 6 shows a third embodiment of a magnet cooling arrangement according to the invention.

In the diagrams, like numbers refer to like objects throughout. Objects in the diagrams are not necessarily drawn to scale.

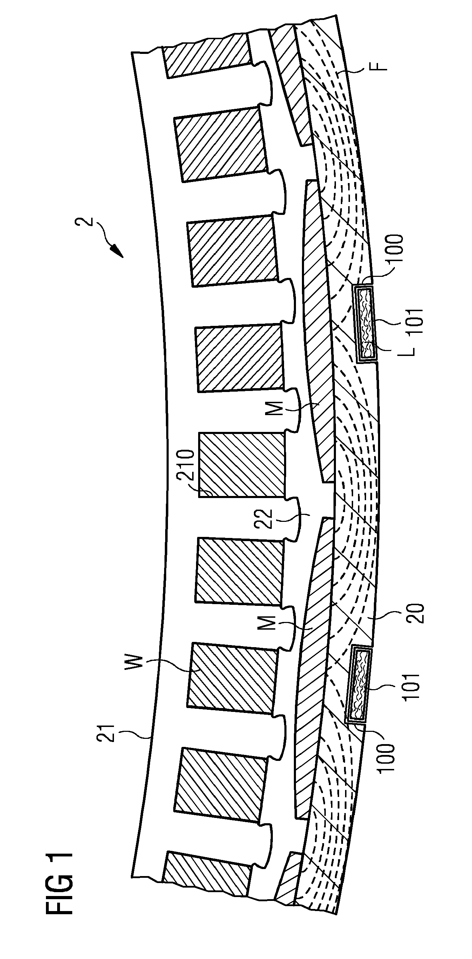

Fig. 1 shows a portion of a permanent-magnet synchronous generator 2 of a wind turbine according to the invention. The diagram shows an outer rotor 20 and an inner stator 21, separated by a narrow air-gap 22. The stator 21 comprises stator teeth 210, between which the windings W are arranged. These give off considerable amounts of heat during operation, causing the magnet poles M of the outer rotor 20 to heat up. In this exemplary embodiment, the rotor 20 has been machined to form magnet cooling channels 100 along the axial length of the rotor 20. A cooling element 101 filled with a liquid coolant L such as water is laid in the magnet cooling channel 100, and can be affixed to the magnet cooling channel 100 by adhesive or other means. The cooling element 101 is shown here to have a rectangular cross-section, but can have any suitable shape such as a rounded shape, a triangular shape, etc. The diagram also shows exemplary magnetic field lines F through the rotor body. The closer together the lines are, the greater the density of the magnetic flux. The diagram illustrates that the magnet cooling channel 100 is positioned in a region of low or negligible magnetic flux density. The low magnetic flux in this region does not make any significant contribution to the electromagnetic reluctance seen by the armature reaction, so that the placement of a cooling element 101 in this region does not decrease the output torque of the generator 2. During operation of the wind turbine, the magnets M are heated, and heat is transferred to the cooling liquid L through the body of the rotor 20. Convection effects transfer this heat to the outer surface of the cooling element 101, so that heat is dissipated to the outside.

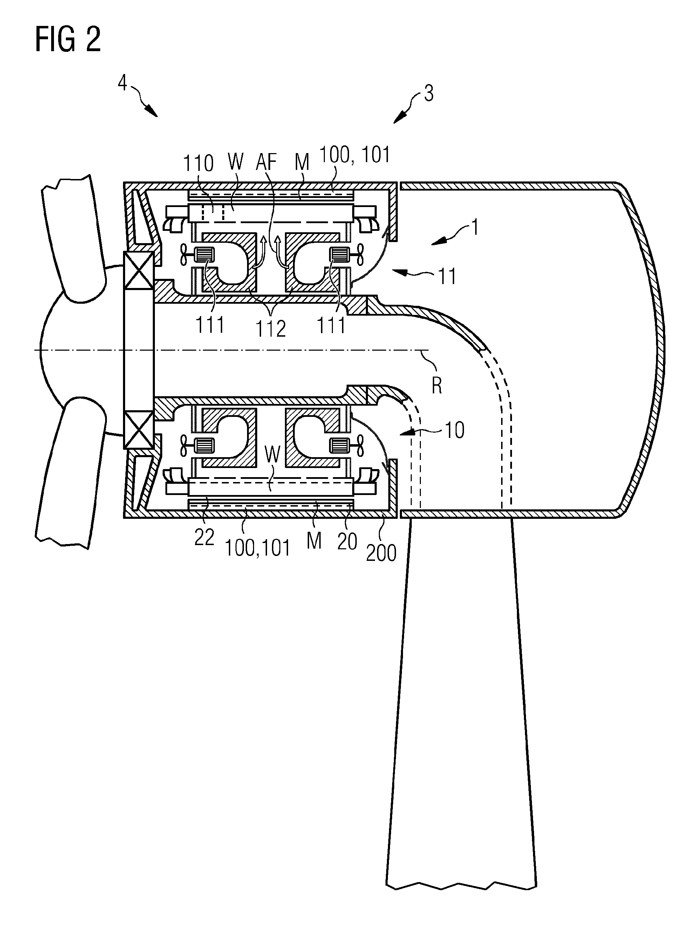

Fig. 2 shows a simplified cross-section through a generator 2 of a wind turbine 4 according to the invention. The diagram shows an arrangement of axial magnet cooling channels 100 of a magnet cooling arrangement 10, and also indicates a winding cooling arrangement 11. Together, the magnet cooling arrangement 10 and the winding cooling arrangement 11 combine to give an efficient cooling arrangement 1 for the generator 2. The diagram indicates various elements of the magnet cooling arrangement 10 such as axial magnet cooling channels 100 (indicated by the broken line through the body of the rotor 20) and cooling elements 101. While only two such cooling elements 101 are shown, it is to be understood that there may be as many cooling elements 101 as there are permanent magnets M on the rotor 20.

The diagram also indicates various elements of the winding cooling arrangement 11 such as stator channels 110, and a winding cooling circuit comprising a number of heat exchangers 112 arranged in the stator interior, and a number of fans 111 to circulate a cooling airflow AF.

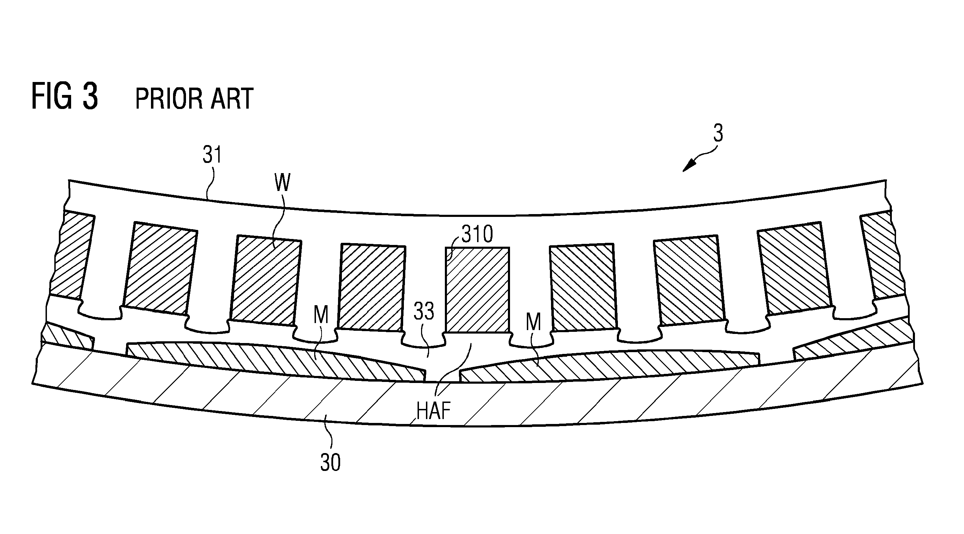

Fig. 3 shows a portion of a prior art permanent-magnet synchronous generator 3. The diagram shows an outer rotor 30 and an inner stator 31, separated by a narrow air-gap 33. The stator 31 comprises stator teeth 310, between which the windings W are arranged. These give off considerable amounts of heat during operation, causing the magnet poles M of the outer rotor 30 to heat up. This effect can be exacerbated by a hot airflow HAF that has absorbed heat from the windings W and is being drawn out of the air-gap 33, since the hot air transfers even more heat to the magnet poles M. The problem with such a generator is that the excessive temperature in the permanent magnets ultimately leads to a reduction of remanence and a lowering of the coercivity knee-point value. These negative effects lead to a worsening of the performance of the generator, and therefore also to a loss in revenue and to increased maintenance costs.

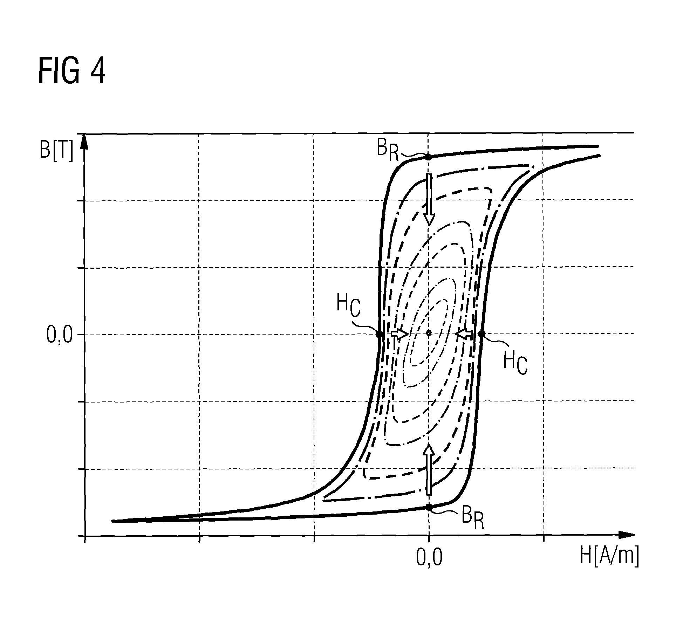

Fig. 4 shows a family of hysteresis loops for a permanent magnet, with magnetic flux density B along the Y-axis (in Tesla) and magnetic field H along the X-axis (in units of A/m). The point B_{R} denotes the remanence of a permanent magnet, and is a measure of the strength of the permanent magnet. The knee-point H_{C} is the coercivity, which is a measure of the magnet's ability to withstand an external electric field. With increasing magnet temperature, the remanence flux density decreases as indicated by the vertical arrows, and the coercivity also decreases as indicated by the horizontal arrows.

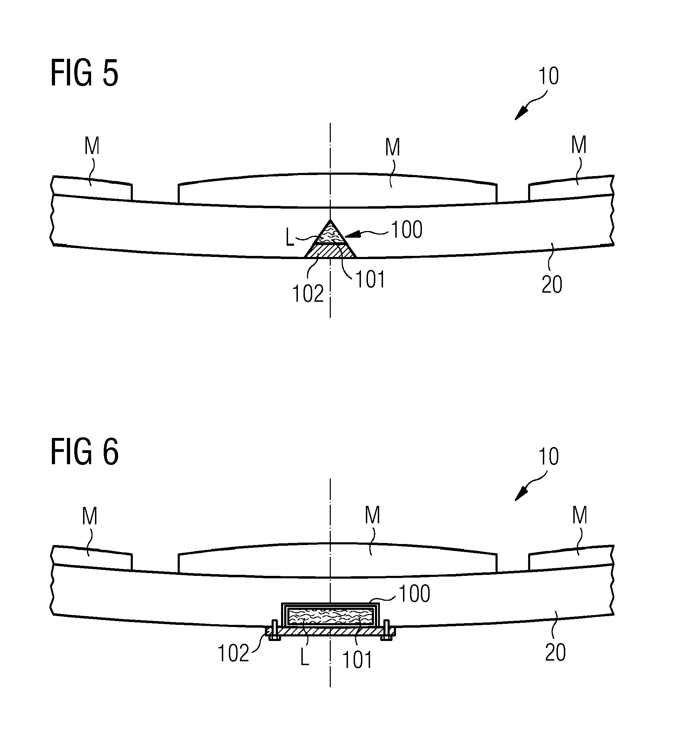

Fig. 5 shows a second embodiment of a magnet cooling arrangement 10 according to the invention. Again, only a portion of the rotor 20 of a wind turbine generator is shown, similar to Fig. 1. In this exemplary embodiment, the magnet cooling channel 100 is shown to be triangular in cross-section and contains a triangular shaped cooling element 101 filled with water L. A heat sink element 102 is laid over the cooling element 101 such that the cooling element 101 and heat sink element 102 fill the cooling channel 100. During operation of the wind turbine, the magnets M are heated, and heat is transferred to the cooling liquid L through the body of the rotor 20. Convection effects transfer this heat to the heat sink element 102, which in turn dissipates the heat to the outside.

Fig. 6 shows a third embodiment of a magnet cooling arrangement according to the invention. Here also, only a portion of the rotor 20 of a wind turbine generator is shown, similar to Fig. 1 and Fig. 5. In this exemplary embodiment, the magnet cooling channel 100 is shown to be rectangular in cross-section, similar to the embodiment of Fig. 1, and contains a flat cooling element 101 filled with water. A relatively wide heat sink element 102 is secured to the outside of the rotor 20 such that the heat sink element 102 is in thermal contact to the outer surface of the cooling element 101. During operation of the wind turbine, the magnets M are heated, and heat is transferred to the cooling liquid L through the body of the rotor 20. Convection effects transfer this heat to the heat sink element 102, which in turn dissipates the heat to the outside.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A cooling arrangement (1) for a generator (2) comprising a rotor (20) bearing an arrangement of permanent magnets (M), which cooling arrangement (1) comprises a magnet cooling arrangement (10), which magnet cooling arrangement (10) comprises
- a number of magnet cooling channels (100) in the body of the rotor (20); and
- a number of cooling elements (101) filled with a cooling fluid (L), wherein a cooling element (101) is arranged in a magnet cooling channel (100) such that the cooling fluid (L) absorbs heat from the permanent magnets (M) during operation of the generator (2).

2. A cooling arrangement according to claim 1, wherein a magnet cooling channel (100) is arranged along a region of low magnetic flux of a permanent magnet (M).

3. A cooling arrangement according to claim 1 or claim 2, comprising a magnet cooling channel (100) for each permanent magnet (M) arranged on the rotor (20).

4. A cooling arrangement according to any of the preceding claims, wherein a cooling channel (100) is arranged essentially parallel to the rotational axis (R) of the generator (2).

5. A cooling arrangement according to any of the preceding claims, wherein a cooling element (101) comprises a sealed fluid-filled container (101).

6. A cooling arrangement according to claim 5, wherein the cooling fluid (L) comprises water (L).

7. A cooling arrangement according to any of the preceding claims, wherein a magnet cooling channel (100) comprises a radial cross-sectional shape based on the form of a region of low magnetic flux.

8. A cooling arrangement according to any of the preceding claims, comprising a heat sink element (102) in thermal contact with a cooling element (101) of the magnet cooling arrangement (10).

9. A cooling arrangement according to any of the preceding claims, comprising a winding cooling arrangement (11) for cooling a plurality of windings (W) arranged on a stator (21) of the generator (2), which winding cooling arrangement (11) comprises
- a number of winding cooling channels (110) arranged between the windings (W) and/or in the body of the stator (21); and
- a stator cooling circuit (111, 112) for conveying a cooling fluid (AF) through the winding cooling channels (110).

10. A cooling arrangement according to claim 9, wherein the stator cooling circuit (11) is realized to convey a cooling gas (AF) through the winding cooling channels (110).

11. A method of cooling a generator (2) comprising a rotor (20) bearing an arrangement of permanent magnets (M) and a stator (21) comprising an arrangement of windings (W), which method comprises the steps of
- arranging a number of magnet cooling channels (100) in the body of the rotor (20);
- filling a number of cooling elements (101) with a cooling fluid (L); and
- arranging the filled cooling elements (101) in the magnet cooling channels (100).

12. A method according to claim 11, comprising the steps of
- arranging a number of winding cooling channels (110) between the windings (W) and/or in the body of the stator (21); and
- conveying a cooling fluid (AF) through the winding cooling channels (110) to absorb heat from the windings (W).

13. A rotor (20) realized to bear an arrangement of permanent magnets (M), comprising a number of magnet cooling channels (100) in the body of the rotor (20), wherein a magnet cooling channel (100) is realized to accommodate at least a cooling element (101) comprising a fluid-filled container (101).

14. A wind turbine (4) comprising
- a permanent magnet synchronous generator (2) with a rotor (20) bearing an arrangement of permanent magnets (M); and
- a cooling arrangement (1) according to any of claims 1 to 10 realised to cool at least the permanent magnets (M) of the rotor (20).

15. A wind turbine according to claim 14, wherein the wind turbine (4) is a direct-drive wind turbine (4) with an outer rotor (20).
